Europäisches Patentamt

European Patent Office

Office européen des brevets

(19)

(11)  **EP 1 666 140 A1**

(12)                    **EUROPEAN PATENT APPLICATION**
                        published in accordance with Art. 158(3) EPC

(43) Date of publication:
    **07.06.2006 Bulletin 2006/23**

(51) Int Cl.:
    ***B01J 20/18*** (1980.01)      ***F25B 17/08*** (1968.09)
    ***C01B 39/02*** (1995.01)      ***C01B 39/20*** (1995.01)

(21) Application number: **04771032.2**

(22) Date of filing: **29.07.2004**

(86) International application number:
    **PCT/JP2004/010819**

(87) International publication number:
    **WO 2005/011859 (10.02.2005 Gazette 2005/06)**

(84) Designated Contracting States:
    **DE FR GB IT**

(30) Priority:  **30.07.2003  JP 2003203618**
              **23.01.2004  JP 2004015421**

(71) Applicant: **TOSOH CORPORATION**
    **Shunan-shi**
    **Yamaguchi-ken 746-8501 (JP)**

(72) Inventors:
    • **ITABASHI, Keiji**
      **7460001 (JP)**
    • **HARADA, Masashi**
      **7460001 (JP)**
    • **SATO, Koichi**
      **7460017 (JP)**

(74) Representative: **TBK-Patent**
    **Bavariaring 4-6**
    **80336 München (DE)**

(54)  **ADSORBING AGENT COMPRISING ZEOLITE FOR HEAT PUMP AND METHOD FOR PREPARATION THEREOF AND USE THEREOF**

(57)    An adsorbent comprising zeolite exhibiting a moisture adsorption of at least 28 wt.% at 25°C under a partial pressure of water vapor of 5 Torr, and exhibiting a moisture adsorption difference of 15-25 wt.% between a moisture adsorption at 25°C under a partial pressure of water vapor of 5 Torr and a moisture adsorption at 100°C under a partial pressure of water vapor of 15 Torr. This adsorbent is produced by ion-exchanging an exchangeable cation in a zeolite, and then, heat-treating the cation-exchanged zeolite in an air or nitrogen stream, or with steam. The adsorbent exhibits a large moisture adsorption at ordinary temperature under a relatively low partial pressure of water vapor and a small moisture adsorption at a relatively low regeneration temperature, and thus, has an enhanced effective moisture adsorption, and is used for a zeolite-water heat pump system and an open cycle moisture adsorption- desorption system.

EP 1 666 140 A1

**Description**

Technical Field

This invention relates to an adsorbent comprising zeolite for a heat pump, which exhibits a large moisture adsorption at ordinary temperature under a relatively low partial pressure of vapor pressure and is capable of easily desorbing absorbed moisture at a relatively low temperatures; and a process for producing the adsorbent.

This invention further relates to a heat pump system using the adsorbent comprising a zeolite for a heat pump, having the above-mentioned thermal characteristics, such as an air conditioner, a vehicle air conditioner, a refrigerator, a freezer, a refrigerating store, an ice maker, a water cooler, a low-temperature refrigerated provision store, an electronic instrument cooling device, a computer CPU cooling device, a water heating appliance, a warmth-keeping storehouse, a dryer, a freeze-dryer and a dehydrator; and an open cycle moisture adsorption- desorption system using the zeolite adsorbent having the above-mentioned thermal characteristics; and instruments and apparatuses utilizing the open cycle water adsorption -desorption system, such as a humidifier, a humidifying cooler and a humidifying air conditioner.

Background Art

Heat pumps utilizing an adsorbent have heretofore proposed, which includes, for example, a heat pump system using natural zeolite utilizing hot heat due to adsorption heat of moisture, and utilizing cold heat due to heat of vaporization at moisture adsorption after dehydration by solar heat (see D. I. Tchernev; Natural Zeolites, p479-485 [page 480, left column, line 1 to page 482, left column, line 28], published in 1978 by Pergamon Press, United Kingdom; and D. I. Tchernev; Proceedings of 5th International Zeolite Conference, p788-794 [page 788, left column, line 1 to page 790, left column, line 27], published in 1978 by Heydon, United Kingdom.).

A heat pump comprising a zeolite having ion-exchanged with a divalent metal ion such as $Mg^{2+}$ has been proposed (see Japanese Unexamined Patent Publication [JP-A] No. 2001-239156, column 3, line 16-column 4, line 43). For effectively utilizing a heat pump, it is important that the heat of moisture adsorption is large and the heat of vaporization of water is converted to cold heat with enhanced efficiency. Therefore, a zeolite exhibiting a large moisture adsorption at ordinary temperature and exhibiting a greatly reduced moisture adsorption at a relatively low generation temperature of, for example, not higher than 150°C would have high utility value. Although the zeolite of the above-mentioned heat pump as proposed in JP-A 2001-239156 exhibits a large moisture adsorption at ordinary temperature, it exhibits a large moisture adsorption at a relatively low generation temperature of not higher than 150°C and thus its effective moisture adsorption is poor.

FAU-type zeolite having ion-exchanged with a rare earth metal ion, and stabilized FAU-type zeolite have been proposed (see U.S. Patent No. 5,503,222 [column 4, line 56-column 5, line 22], ibid. 5,512,083 [column 7, lines 6-34], ibid. 5,518,977 [column 6, lines 43-50], ibid. 5,535,817 [column 5, lines 38-45] and ibid. 5,667,560 [column 6, lines 31-39]). However, the FAU-type zeolite having ion-exchanged with a rare earth metal ion, and the stabilized FAU-type zeolite do not have a high effective moisture adsorption and are expensive. Therefore these zeolites have restricted applications.

An adsorbent comprising FAU-type zeolite for a heat pump is described in JP-A 2002-028482 (column 3, lines 17-43). However, moisture adsorption characteristics required especially for a zeolite-water heat pump system and an open cycle moisture adsorption-desorption system are not discussed in this patent publication, and the moisture adsorption characteristics of zeolite specifically described in the working examples of this publication show still poor practical utility.

Problems to Be Solved by the Invention

An object of the present invention is to provide an adsorbent comprising a zeolite for a heat pump, which exhibits a large moisture re-adsorption at ordinary temperature under a low pressure, that is approximately the same level as that of the conventional zeolite, and exhibits a small moisture adsorption at a relatively low regeneration temperature, and thus, has an enhanced effective amount of moisture adsorption.

Another object of the present invention is to provide an instrument or device comprising the adsorbent comprising a zeolite for a heat pump, such as a heat pump system or a moisture adsorption-desorption system.

Means for Solving the Problems

To solve the problems of the prior art, the present inventors made extensive researches on the structure and composition of zeolite, the ion-exchangeable cation species to be introduced in zeolite, the heat-treating conditions of zeolite and the moisture adsorption-desorption characteristics of zeolite, and found a zeolite exhibiting a large moisture re-adsorption at ordinary temperature under a low pressure, that is approximately the same level as that of the conventional zeolite, and further exhibiting a small moisture adsorption at a relatively low regeneration temperature, and thus, having an enhanced effective moisture adsorption. The inventors further found that, when this zeolite is used for a heat pump system, a heat generation due to adsorption heat upon adsorption of moisture is large, and a heat generation of due to heat of vaporization of water is large. Based on these findings, the present invention has been completed.

Thus, in accordance with the present invention, there is provided an adsorbent comprising a zeolite for a heat pump characterized in that the zeolite has a moisture adsorption of at least 28% by weight as measured at a temperature of 25°C under a partial pressure of water vapor of 5 Torr, and exhibits a moisture adsorption difference in the range of 15% to 25% by weight between a moisture adsorption as measured at a temperature of 25°C under a partial pressure of water vapor of 5 Torr and a moisture adsorption as measured at a temperature of 100°C under a partial pressure of water vapor of 15 Torr.

In accordance with the present invention, there is further provided a process for producing the above-mentioned adsorbent comprising a zeolite for a heat pump, which comprises the steps of:

ion-exchanging an exchangeable cation in a zeolite, and then,
heat-treating the cation-exchanged zeolite in a stream of air or nitrogen, or in the presence of steam.

Effect of the Invention

The adsorbent comprising a zeolite for a heat pump according to the present invention can be used for a zeolite-water heat pump system and an open cycle moisture adsorption-desorption system. In these zeolite-water heat pump system and open cycle moisture adsorption-desorption system, a low-temperature exhaust heat, a cogeneration exhaust heat, a midnight starting electric power, a solar heat, a terrestrial heat and a spa heat can be utilized as the heat source for regeneration. These systems do not produce any harmful substances and do not cause any environmental pollution, and are advantageous from an economical view point.

Brief Description of the Drawings

Fig. 1 is a schematic block diagram illustrating an example of a zeolite-water heat pump system comprising the zeolite adsorbent according to the present invention.
Fig. 2 is a schematic block diagram illustrating an example of a zeolite dehumidifying rotor comprising the zeolite adsorbent according to the present invention.
Fig. 3 is an example of moisture adsorption isotherm.

Explanation of Reference Numerals:

| | |
|---|---|
| 1 | Zeolite-packed vessel |
| 2 | Zeolite bed |
| 3 | Condenser |
| 4 | Water reservoir |
| 5, 5' | Valves |
| 6 | Temperature and pressure sensor |
| 7 | Hot heat taking-out region |
| 8 | Cooling water |
| 9 | Cold heat taking-out region |
| 10 | Vacuum pump |
| 11 | Regenerating heater |
| 12 | Humid air |
| 13 | Filter |
| 14 | Fan |
| 15 | Dehumidified air |
| 16 | Dehumidifying rotor |

Best Mode for Carrying Out the Invention

The adsorbent comprising a zeolite for a heat pump according to the present invention is characterized in that the zeolite has a moisture adsorption of at least 28% by weight as measured at a temperature of 25°C under a partial pressure of water vapor of 5 Torr, and exhibits a moisture adsorption difference in the range of 15% to 25% by weight between a moisture adsorption as measured at a temperature of 25°C under a partial pressure of water vapor of 5 Torr and a moisture adsorption as measured at a temperature of 100°C under a partial pressure of water vapor of 15 Torr. The zeolite exhibits an amount of desorbed moisture of at least 9% by weight and at least 20% by weight as measured when the zeolite in a moisture-saturated adsorption state is heated from room temperature to 100°C and 200°C, respectively, as described in Japanese Unexamined Patent Publication No. 2002-028482. Thus, the difference in an amount of desorbed moisture between 100°C and 200°C, to which the moisture-saturated zeolite is heated, is at least 10% by weight. Especially the zeolite adsorbent is characterized as exhibiting a large amount of desorped moisture at a low temperature of not higher than 150°C, and thus, a low regeneration temperature can be adopted.

The zeolite adsorbent of the present invention has a moisture adsorption of at least 28% by weight, preferably at least 29% by weight and more preferably at least 30% by weight, as measured at a temperature of 25°C under a partial pressure of water vapor of 5 Torr. Thus the zeolite adsorbent has moisture adsorption characteristics of approximately the same level as those of the conventional moisture adsorbents under a low partial pressure of water vapor.

The zeolite adsorbent exhibits a moisture adsorption difference between a moisture adsorption as measured at a temperature of 25°C under a partial pressure of water vapor of 5 Torr and a moisture adsorption as measured at a temperature of 100°C under a partial pressure of water vapor of 15 Torr, in the range of 15% to 25% by weight, preferably 17% to 25% by weight and more preferably 19% to 25% by weight. Thus the zeolite adsorbent has a large effective moisture adsorption suitable for a zeolite-water heat pump system and an open cycle moisture absorption-desorption system.

Zeolite is a porous crystalline aluminosilicate salt represented by the following formula:

$$xM_{2/n}O. \; Al_2O_3 \cdot ySiO_2 \cdot zH_2O$$

where n is an atomic valence of cation M, x is a number in the range of 0.8 to 1.2, y is a number of at least 2 and z is a number of at least 0. The cation M is bonded so as to compensate the negative charge of the frame-work structure of aluminosilicate salt. In general the exchangeable cation M is an alkali metal or an alkaline earth metal and/or an organic cation, and can be easily exchanged with another cation. The zeolite can be treated with an inorganic acid, or can be treated with an ammonium salt to have thereby introduced therein an ammonium ion, and then heat-treated to be thereby converted to a proton-type. The frame-work structure of zeolite is such that four oxygen atoms are coordinated to the central silicon and aluminum atoms to form tetrahedral structures, each of which is three-dimensionally bonded to other in a regular fashion with covalence of the oxygen atoms . The crystalline structure can be characterized by powder X-ray diffractometry. Many types of zeolites are known. Zeolite has pores having a diameter in the range of about 3 to 10 angstroms in the frame-work structure, and the type of zeolite is characterized by the pore diameter and the pore structures.

The larger the number z in the above formula for zeolite, the larger the amount of moisture adsorption of zeolite. However, zeolite has a strong affinity with water and thus the moisture adsorbed is not readily desorbed until the zeolite is heated to a high temperature. Although the moisture adsorption characteristics of zeolite vary more or less depending upon the particular kind of zeolite, the Si/Al ratio and the particular ion exchange, zeolite having a large amount of moisture adsorption at room temperature also exhibits a large amount of moisture adsorption at a high temperature. Therefore it is generally extremely difficult to enlarge the difference in amount of moisture adsorption between room temperature and the regeneration temperature.

A zeolite-water heat pump system is based on a principle such that an adsorption heat generated when a dehydrated zeolite adsorbs moisture is utilized as hot heat, and heat of vaporization generated when the adsorbed water is vaporized is utilized as cold heat. This system has been developed for effective utilization of unused energies such as a mid-night electric power, an exhaust heat of low temperature such as an exhaust gas from boiler or a plant, and a natural source of energy such as a solar energy, a terrestrial heat and a spa heat. Generally a low temperature heat source is utilized as the heat source for the zeolite-water heat pump.

Power at heating or cooling by a zeolite heat pump is defined by the following equations.

$$\text{Cooling power } P_c = (W \times Q \times H_c) / T \times f$$

## Heating power $P_h = (W \times Q \times H_h)/T \times f$

where $P_c$: Cooling power (kJ/sec = kW)

$P_h$: Heating power (kJ/sec = kW)

W: Weight of adsorbent (kg) used in one adsorption step

Q: Difference between moisture adsorption at adsorption and moisture adsorption at regeneration (kg·$H_2O$/kg·adsorbent)

$H_c$: Heat of vaporization of water (kJ/kg·$H_2O$)

$H_h$: Heat of adsorption of water (kJ/kg·$H_2O$)

T: Switching time (sec) for adsorption step and regeneration step

f: Heat exchange efficiency (-)

As seen from the above equations, the larger the difference Q between moisture adsorption at adsorption step and moisture adsorption at regeneration step is, the better the energy efficiency is, provided that the other conditions are the same. In the case when a moisture adsorption isotherm is compared, the heat pump system can be utilized with a more enhanced power as the difference between moisture adsorption at ordinary temperature under a relatively low partial pressure of water vapor and moisture adsorption at a regeneration temperature of not higher than 150°C under a relatively high partial pressure of water vapor is larger.

The zeolite-water heat pump usually involves a sealed vacuum system where a zeolite adsorbent adsorbes a large amount of water whereby heat of vaporization of water can be taken-out as cold heat. This system is often designed so that the temperature of water in a water reservoir is lowered to approximately 0°C. The saturated vapor pressure of water at a temperature of approximately 0°C is low, i. e. , about 5 Torr, and zeolite adsorbent is required to adsorb a large amount of moisture even under such low relative humidity conditions. The zeolite-water heat pump utilizes exhaust heat from other systems or natural energy as the regeneration energy, and therefore, moisture must be desorbed at a relatively low regeneration temperature of not higher than 150°C. The desorbed moisture is condensed, and the condensed water is returned at approximately room temperature to a reservoir, and the water vapor pressure is higher than that at adsorption. The water vapor pressure is presumed to be in the range of 10 to 50 Torr, although it varies depending upon the particular use and the conditions under which the heat pump is worked. Therefore, the moisture adsorption characteristics of the zeolite-comprising adsorbent according to the present invention are expressed in terms of the moisture adsorption difference between a moisture adsorption as measured at a temperature of 25°C under a partial pressure of water vapor of 5 Torr and a moisture adsorption as measured at a temperature of 100°C under a partial pressure of water vapor of 15 Torr. This moisture adsorption difference is hereinafter referred to merely as "effective moisture adsorption" when appropriate.

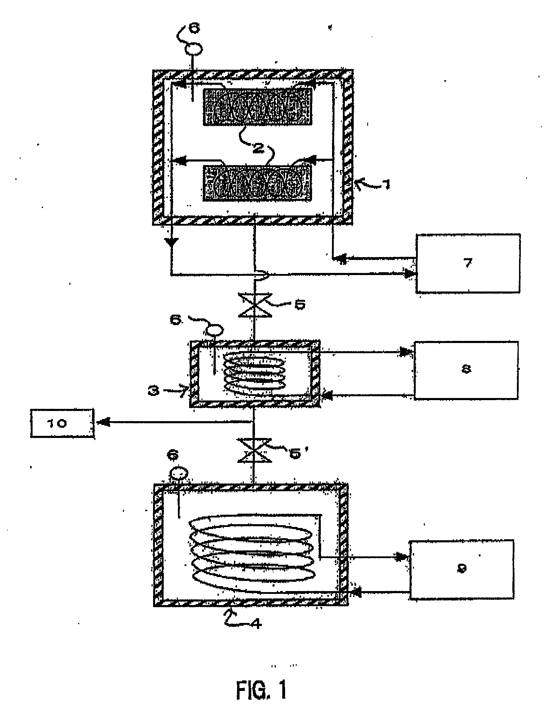

One example of the zeolite-water heat pump system is schematically illustrated in the block diagram of Fig. 1.

In Fig. 1, zeolite beds 2 are arranged in a zeolite-packed vessel 1. The zeolite beds 2 are connected through a pipe to a water reservoir 4. On the way spanning from the zeolite beds 2 to the water reservoir 4, a condenser 3 is provided through which cooling water 8 is circulated. Valves 5 and 5' are provided between the zeolite-packed vessel 1 and the condenser 4, and between the condenser 4 and the water reservoir 4, respectively. Temperature and pressure sensors 6 are provided in the zeolite-packed vessel 1, the condenser 3 and the water reservoir 4, respectively.

The pipe extending from the zeolite-packed vessel 1 to the water reservoir 4 is connected to a vacuum pump 10. By the vacuum pump 10, the inside of the heat pump system is evacuated. The zeolite beds 2 within the zeolite-packed vessel 1 are heated whereby zeolite is dehydrated. Water vapor generated by the heating is cooled in the condenser 3 through which cooling water 8 is circulated. The condensed water is reserved in the reservoir 4.

The valves 5 and 5' are closed and the zeolte beds 2 are cooled by, for example, water from a city water supply. When the valves 5 and 5' are opened again, the water within the reservoir 4 is evaporated and the zeolite absorbes moisture. Thus, the zeolite generates hot heat as adsorption heat, and the water within the reservoir 4 generates cold heat due to the removal of heat of vaporization. The thus-generated hot heat and cold heat are recovered from a hot heat taking-out region 7 and a cold heat taking-out region 9, respectively. Hot heat and cold heat are repeatedly taken out by the above-mentioned cycle of operation.

An open cycle moisture adsorption-desorption system is also desired to comprise a zeolite adsorbent capable of adsorbing a large amount of moisture at ordinary temperature and being regenerated at a relatively low temperature. Therefore, the open cycle moisture adsorption-desorption system also can be evaluated based on the above-mentioned effective moisture adsorption.

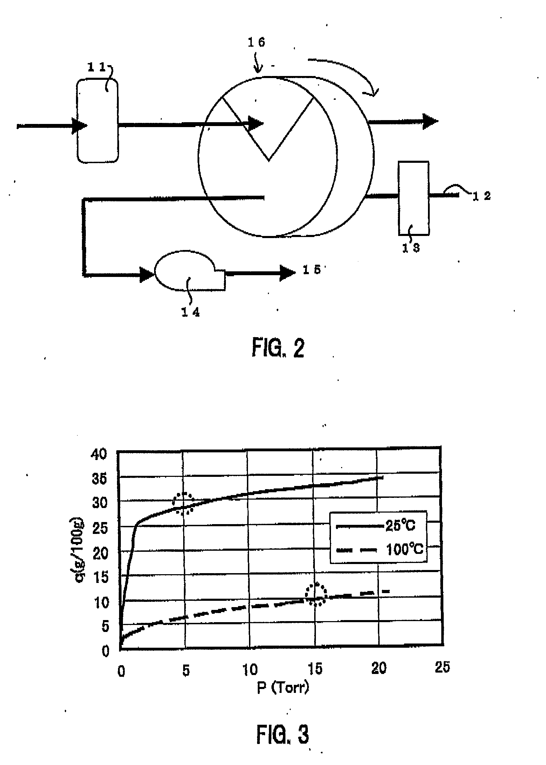

An example of a dehumidifying zeolite adsorbent rotor for the open cycle moisture adsorption-desorption system is schematically illustrated in a block diagram of Fig. 2. Humid air 12 is passed through a filter 13 into a dehumidifying rotor 16 having packed therein a zeolite adsorbent. Moisture is removed from the humid air by the zeolite adsorbent within the dehumidifying rotor 16, and the dehumidified air 15 is exhausted to the outside by a fan 14. The adsorbent comprising the humidified zeolite is regenerated by heated dry air from a regenerating heater 11.

The zeolite adsorbent for a heat pump according to the present invention preferably comprises a FAU-type zeolite. The FAU-type zeolite preferably comprises at least two kinds of exchangeable cations including proton in the zeolite frame-work structure. The zeolite adsorbent for a heat pump preferably has a lattice constant in the range of 24.530 to 24.625 angstroms. An adsorbent comprising heat-treated zeolite or steam-heat-treated zeolite is preferably used.

FAU-type zeolite having a $SiO_2/Al_2O_3$ mole ratio of at least 3, or a modified zeolite thereof, is especially preferably used as the zeolite adsorbent for a heat pump according to the present invention.

The cations in the ion-exchanged zeolite are comprised of a combination of proton and $Na^+$, or a combination of proton, $Na^+$ and at least one metal ion selected from univalent metal ions, other than $Na^+$, and divalent metal ions. That is, the zeolite includes the following four kinds of combinations of cations.

1. Proton plus $Na^+$,
2. Proton, $Na^+$ plus a univalent metal ion other than $Na^+$,
3. Proton, $Na^+$ plus a divalent metal ion, and
4. Proton, $Na^+$, a univalent metal ion other than $Na^+$, plus a divalent metal ion.

As specific examples of the univalent metal ion, there can be mentioned alkali metal ions such as $Li^+$, $Na^+$ and $K^+$. As specific examples of the divalent metal ions, there can be mentioned alkaline earth metal ions such as $Mg^{2+}$. $Ca^{2+}$, $Sr^{2+}$ and $Ba^{2+}$, and metals of groups 4 and 6-12 of the periodic table, such as $Mn^{2+}$ and $Zn^{2+}$. If the zeolite contains a single kind of cation, the effect of the present invention cannot be obtained, and thus, the zeolite must contain a combination of proton with $Na^+$, or a combination of proton and $Na^+$ with at least one metal ion selected from univalent metal ions other than $Na^+$, and divalent metal ions. The univalent metal ions other than $Na^+$, and the divalent metal ions may be contained either alone or as a combination of at least two thereof.

A zeolite containing a combination of proton and $Na^+$ with a trivalent metal ion has approximately the same moisture adsorption as that of the zeolite with a univalent or divalent metal ion according to the present invention under model desorption conditions, i.e., at a temperature of 100°C under a partial pressure of water vapor of 15 Torr. But, this zeolite with a trivalent metal ion exhibits a small moisture adsorption under a model adsorption conditions, i.e., at a temperature of 25°C under a partial pressure of water vapor of 5 Torr, as compared with the moisture adsorption of the zeolite according to the present invention. That is, the effective moisture adsorption of the zeolite with a trivalent metal ion is poor. Trivalent metal ions are difficult to introduce by ion exchange, and are generally expensive, and therefore, are not adopted in the present invention.

Proton may be introduced by procedures wherein an ammonium ion is introduced by ion exchange and then a heat-treatment is conducted to remove $NH_3$. The ammonium ion can be converted to proton by a mere heat-treatment, but the ammonium ion introduced by ion exchange can be followed by a steam-heat-treatment whereby a high effective moisture adsorption can preferably be obtained.

The introduction of an ammonium ion, a univalent metal ion or a divalent metal ion by ion exchange can be conducted by using an aqueous solution of a salt such as a chloride, a nitric acid salt or an acetic acid salt. Proton may be directly introduced by ion exchange by using a dilute aqueous acid solution instead of an ammonium ion. Ion exchange of at least two kinds of ions can be conducted either one by one, or at once by using an aqueous mixed solution.

The procedure for ion exchange is not particularly limited. There can be adopted a batchwise procedure, or a continuous procedure using a belt filter generally adopted.

In the case when the zeolite contains proton and $Na^+$ in the ion-exchanged zeolite, the content of proton introduced by ion-exchange is preferably in the range of 30% to 70%, and the content of $Na^+$ is preferably in the range of 25% to 75%.

In the case when the ion-exchanged zeolite contains proton, $Na^+$ and at least one metal ion selected from univalent metal ions other than $Na^+$, and divalent metal ions, the content of proton introduced by ion exchange is preferably in the range of 30% to 75%, and the sum of the content of $Na^+$ plus the total content of univalent metal ions other than $Na^+$, and divalent metal ions is preferably in the range of 25% to 70%. The total content of univalent metal ions other than $Na^+$, and divalent metal ions is preferably in the range of 1% to 60%, more preferably 1% to 30%, based on the total of cations including proton.

The zeolite preferably has a lattice constant in the range of 24.530 to 24.625 angstroms. It is known that, when a Y-type zeolite is, for example, heat-treated, aluminum is removed from the frame-work structure and its $SiO_2/Al_2O_3$ ratio is increased with the result of a decrease of the lattice constant. If the lattice constant is smaller than 24.530, the moisture adsorption at an ordinary temperature and under a low pressure is small. In contrast, if the lattice constant is larger than 24.625, the moisture adsorption at a relatively regeneration temperature of not higher than 150°C is large, and thus, the effective moisture adsorption is poor.

The adsorbent comprising a zeolite according to the present invention is produced by a process comprising the steps of ion-exchanging an exchangeable cation in the zeolite, and then, heat-treating the cation-exchange zeolite in a stream of air or nitrogen, or heat-treating the cation-exchange zeolite in the presence of steam.

The heat-treatment of the cation-exchange zeolite in a stream of air or nitrogen is preferably carried out at a temperature of at least 550°C for at least one hour. The heat-treating temperature is more preferably at least 600°C. If the heat-treating temperature is low, the moisture adsorption at a relatively low regeneration temperature of not higher than 150°C is large and thus the effective moisture adsorption is poor. The heat-treating temperature is preferably not higher than 800°C, more preferably not higher than 750°C. If the heat-treating temperature is too high, the moisture adsorption at ordinary temperature under a low pressure is small and the effective moisture adsorption is poor.

The heat-treatment of the cation-exchange zeolite in the presence of steam is preferably carried out by bringing the zeolite in contact with steam at a temperature of at least 500°C for at least one hour. The heat-treating temperature is more preferably at least 550°C. By the contact with steam, the moisture adsorption at a temperature of 100°C can be lowered as compared with the case when the heat-treatment is carried out at the same temperature in the absence of steam. The steam-heat-treating temperature is preferably not higher than 800°C, more preferably not higher than 750°C.

The apparatus used for the heat-treatment in a stream of air or nitrogen, or in the presence of steam, is not particularly limited, and conventional electric oven and tublar oven can be preferably used.

The apparatus for preparing an adsorption isotherm for evaluating the effective moisture adsorption is not particularly limited. An electronic force balance or a spring balance can be adopted, by which a weight increase due to the moisture adsorption can easily be measured.

The adsorbent according to the present invention comprises a zeolite as the principal ingredient. The zeolite may be either as it is powdery, or a coating form such as formed by coating a honeycomb rotor with a slurry of zeolite powder. The zeolite may be a particulate molding prepared from a zeolite powder composition having added therein a suitable amount of a binder and an aid for molding. The shape and dimension of the particulate molding are not particularly limited and can be appropriately determined depending upon the size of vessel in the system or the packing density. The binder used is not particularly limited, but preferably has a high heat conductivity so as to enhance the efficiency of heat exchange. As the amount of binder increases, the weight of the adsorbent increases and the amount of moisture adporption per unit volume of the adsorbent zeolite decreases. Therefore, the amount of binder is preferably as small as possible provided that the desired mechanical strength endurable for the working conditions can be obtained.

The particulate molding may be binderless. A binderless particulate molding can be made, for example, by a method as described in Japanese Unexamined Patent Publication No. H6-74129 wherein a mixture comprising as the principal ingredients a silica source, an alumina source and an alkali source and water is kneaded together, and the kneaded mixture is molded into a desired shape, and then heated in an aqueous alkali solution. The binderless zeolite particlulate molding comprises zeolite in an amount larger than the conventional binder-containing particulate molding, and therefore, it is preferable because the effective moisture adsorption per unit weight of the particulate molding is large.

The moisture adsorption of the particulate molding according to the present invention refers to a moisture adsorption as expressed in terms of that of net zeolite containing no binder. The moisture adsorption of the particulate molding by correcting the moisture adsorption as measured on the particulate molding on the basis of the content of net zeolite in the particulate molding.

The effective moisture adsorption of the particulate molding according to the present invention refers to the moisture adsorption difference between a moisture adsorption as measured at a temperature of 25°C under a partial pressure of water vapor of 5 Torr and a moisture adsorption as measured at a temperature of 100°C under a partial pressure of water vapor of 15 Torr. The moisture adsorption of net zeolite in the particulate molding and the moisture adsorption as measured on the particulate molding have a relationship represented by the following equation.

$$Q_z = Q_{DM}/X$$

where $Q_z$: moisture adsorption of net zeolite
$Q_{DM}$; moisture adsorption as measured on the particulate molding
X: ratio of the weight of net zeolite to the total weight of particulate molding

The zeolite adsorbent according to the present invention is a crystal having enhanced stability to heat, and, when the cycle of moisture adsorption and heat regeneration is repeated, the zeolite is subject to little or no difference in the frame-work structure, and the effective moisture adsorption is reduced only to a negligible extent.

In the zeolite-water heat pump system and the open cycle moisture adsorption-desorption system, which comprises the adsorbent comprising a zeolite according to the present invention, a low-temperature exhaust heat, a cogeneration exhaust heat, a midnight starting electric power, a solar heat, a terrestrial heat and a spa heat can be utilized as the heat source for regeneration. These systems do not produce any harmful substances and do not cause any environmental pollution, and are advantageous from an economical view point.

The adsorbent comprising a zeolite according to the present invention can be used in a zeolite-water heat pump system and an open cycle moisture adsorption-desorption system. The zeolite-water heat pump system can be utilized for a temperature regulator, a cooler and a water-removing device. The temperature regulator includes, for example, an air conditioner, a vehicle air conditioner, a low-temperature store, a hot water supply and a warmth-keeping storehouse. The cooler includes, for example, a refrigerator, a freezing store, an ice-maker, a water cooler, an electronic instrument-cooling device, a computer CPU cooling device and a freeze-dryer. The water-removing device includes, for example, a dryer and a dehydrator. The open cycle moisture adsorption -desorption system can be utilized in a dehumidifier provided with a dehumidifying adsorbent rotor comprising a zeolite adsorbent. The dehumidifier includes, for example, a dehumidifying cooler and a dehumidifying air conditioner.

Examples

The invention will now be described more specifically by the following examples that by no means limit the scope of the invention.

In Examples and Comparative Examples, hydration of a zeolite was conducted by leaving the zeolite over the night within a vacuum desiccator maintained at a temperature of 25°C and a relative humidity of 80%.

In Examples and Comparative Examples, properties of zeolite adsorbent were evaluated by the following methods.

Composition of Exchangeable Metal Ions

The composition of exchangeable metal ions was analyzed by an ICP method, and the undetermined cation was regarded as proton. "M" in the column of ion exchange ratio in Tables 1 and 2, below, signifies exchangeable cations other than Na and proton.

Moisture Adsorption Characteristics

A zeolite sample was activated by maintaining at 350°C under a reduced pressure for 2 hours. Moisture adsorption isothermal curves at temperatures of 25°C and 100°C were drawn by a spring balance method, and the moisture adsorption was determined at a temperature of 25°C and a water vapor partial pressure of 5 Torr, and at a temperature of 100°C and a water vapor partial pressure of 15 Torr. The moisture adsorption was expressed by the amount in gram of moisture adsorbed per 100 g of the activated (dehydrated) zeolite sample before the measurement of moisture adsorption. In the case where the zeolite is a molded particulate material containing a binder, the moisture adsorption was expressed in terms of the amount of moisture adsorbed per the net mass of zeolite from which a binder is excluded. Examples of the moisture adsorption isothermal curves are shown in Fig. 3.

Lattice Constant

The lattice constant was determined by analyzing an X-ray powder diffraction pattern of hydrated zeolite by a pattern decomposition method, i.e., whole-powder-pattern-decomposition (WPPD) method.

Example 1

FAU-type zeolite having a $SiO_2/Al_2O_3$ ratio of 5.6 by mole (trade name "HSZ-320NAA" available from Tosoh Corporation) was incorporated in an aqueous solution having dissolved therein $MgCl_2$ and $NH_4Cl$ in amounts of 3 equivalents and 10 equivalents, respectively, to the content of aluminum in zeolite. The mixture was maintained at 60°C for 20 hours while being stirred whereby $Mg^{2+}$ and $NH_4^+$ were introduced in the zeolite by ion-exchange. The ion-exchange zeolite was washed with pure water and then dried at 75°C. Then the dried powdery zeolite was hydrated and placed in an electric oven where the powder was steam-heated at 600°C for one hour. Then the powder was again hydrated, and the composition, moisture adsorption characteristics and lattice constant of the powder were evaluated. The results are shown in Table 1.

Examples 2 to 4

The same treating procedures and evaluation methods as described in Example 1 were conducted wherein $MnCl_2$ (Example 2), $ZnCl_2$ (Example 3) or $Ba(OC(O)CH_3)_2$ (Example 4) was used instead of $MgCl_2$ with all other conditions remaining the same. The results are shown in Table 1.

Examples 5 to 7

The same treating procedures and evaluation methods as described in Example 1 were conducted wherein

CaCl$_2$ was used instead of MgCl$_2$ and the steam-heating temperature was changed to 500°C (Example 5), 600°C (Example 6) or 700°C (Example 7) with all other conditions remaining the same. The results are shown in Table 1.

Examples 8 and 9

The same treating procedures and evaluation methods as described in Example 1 were conducted wherein CaCl$_2$ was used instead of MgCl$_2$ and the mixing ratio of CaCl$_2$ to NH$_4$Cl was varied as follows.

Example 8: CaCl$_2$ 10 equivalents/NH$_4$Cl 3 equivalents
Example 9: CaCl$_2$ 10 equivalents/NH$_4$Cl 10 equivalents

Thus the composition of zeolite was varied as shown in Table 1. All other conditions remained the same. The results are shown in Table 1.

Examples 10 to 12

The same treating procedures and evaluation methods as described in Example 1 were conducted wherein LiCl was used instead of MgCl$_2$ and the mixing ratio of LiCl to NH$_4$Cl was varied as follows.

Example 10: LiCl 10 equivalents/NH$_4$Cl 2 equivalents
Example 11: LiCl 5 equivalents/NH$_4$Cl 3 equivalents
Example 12: LiCl 5 equivalents /NH$_4$Cl 4 equivalents

The pH value of ion-exchanged slurry was changed from 7.5 to 8.0, and thus the composition of zeolite was varied as shown in Table

1. All other conditions remained the same. The results are shown in Table 1.

Examples 13 to 15

FAU-type zeolite having a SiO$_2$/Al$_2$O$_3$ ratio of 5.6 by mole (trade name "HSZ-320NAA" available from Tosoh Corporation) was incorporated in an aqueous NH$_4$Cl solution. The concentration of NH$_4$Cl in the aqueous solution was 0.5 equivalent (Example 13), 1.5 equivalents (Example 14) or 3 equivalents (Example 15), respectively, to the content of aluminum in zeolite. The mixture was maintained at 60°C for 20 hours with stirring whereby NH$_4^+$ was introduced in the zeolite by ion-exchange. The ion-exchanged zeolite was washed with pure water and then dried at 75°C. Then the dried powdery zeolite was hydrated and placed in an electric oven where the powder was steam-heated at 600°C for one hour. Then the powder was again hydrated, and the composition, moisture adsorption characteristics and lattice constant of the powder were evaluated. The results are shown in Table 1.

Example 16

FAU-type zeolite having a SiO$_2$/Al$_2$O$_3$ ratio of 5.6 by mole (trade name "HSZ-320NAA" available from Tosoh Corporation) was incorporated in an aqueous solution having dissolved therein KCl and NH$_4$Cl in amounts of 1 equivalent and 10 equivalents, respectively, to the content of aluminum in zeolite. The mixture was maintained at 60°C for 20 hours while being stirred whereby K$^+$ and NH$_4^+$ were introduced in the zeolite by ion-exchange. The ion-exchanged zeolite was washed with pure water and then dried at 75°C. Then the dried powdery zeolite was hydrated and placed in an electric oven where the powder was steam-heated at 600°C for one hour. Then the powder was hydrated, and the composition, moisture adsorption characteristics and lattice constant of the powder were evaluated. The results are shown in Table 1.

Examples 17 to 21

FAU-type zeolite having a SiO$_2$/Al$_2$O$_3$ ratio of 5.6 by mole (trade name "HSZ-320NAA" available from Tosoh Corporation) was incorporated in an aqueous solution having dissolved therein 10 equivalents of MgCl$_2$ (Example 17) or MnCl$_2$ (Example 18) or ZnCl$_2$ (Example 19) or CaCl$_2$ (Example 20) or LiCl (Example 21), respectively, to the content of aluminum in zeolite, and further 10 equivalents of NH$_4$Cl to the content of aluminum in zeolite. Each mixture was maintained at 60°C for 20 hours while being stirred whereby Mg$^{2+}$, Mn$^{2+}$, Zn$^{2+}$, Ca$^{2+}$ or Li$^+$, and NH$_4^+$ were introduced in the zeolite by ion-exchange. The ion-exchanged zeolite was washed with pure water and then dried at 75°C. Then the dried zeolite was heated in an air stream at 500°C for one hour. Then the zeolite was hydrated, and the composition, moisture adsorption characteristics and lattice constant of the powder were evaluated. The results are shown in Table 1.

Example 22

FAU-type zeolite having a $SiO_2/Al_2O_3$ ratio of 5.6 by mole (trade name "HSZ-320NAA" available from Tosoh Corporation) was incorporated in an aqueous solution having dissolved therein $NH_4Cl$ in an amount of 3 equivalents to the content of aluminum in zeolite. The mixture was maintained at 60°C for 20 hours while being stirred whereby $NH_4^+$ was introduced in the zeolite by ion-exchange. The ion-exchanged zeolite was washed with pure water and then dried at 75°C. Then the dried zeolite was heated in an air stream at 550°C for one hour. Then the zeolite was hydrated, and the composition, moisture adsorption characteristics and lattice constant of the powder were evaluated. The results are shown in Table 1.

Examples 23 and 24

FAU-type zeolite having a $SiO_2/Al_2O_3$ ratio of 5.6 by mole (trade name "HSZ-320NAA" available from Tosoh Corporation) was incorporated in an aqueous solution having dissolved therein $NH_4Cl$ in an amount of 1.5 equivalents to the content of aluminum in zeolite. The mixture was maintained at 60°C for 20 hours while being stirred whereby $NH_4^+$ was introduced in the zeolite by ion-exchange. The ion-exchanged zeolite was washed with pure water and then dried at 75°C. Then the dried zeolite was heated in an air stream at 600°C (Example 23) or 700°C (Example 24) for one hour. Then the zeolite was hydrated, and the composition, moisture adsorption characteristics and lattice constant of the powder were evaluated. The results are shown in Table 1.

Examples 25 and 26

FAU-type zeolite having a $SiO_2/Al_2O_3$ ratio of 5.6 by mole (trade name "HSZ-320NAA" available from Tosoh Corporation) was incorporated in an aqueous solution having dissolved therein $CaCl_2$ and $NH_4Cl$ in amounts of 3 equivalents and 10 equivalents, respectively, to the content of aluminum in zeolite. The mixture was maintained at 60°C for 20 hours while being stirred whereby $Ca^{2+}$ and $NH_4^+$ were introduced in the zeolite by ion-exchange. The ion-exchanged zeolite was washed with pure water and then dried at 75°C. Then the dried zeolite was heated in an air stream at 600°C (Example 25) or 700°C (Example 26) for one hour. Then the zeolite was hydrated, and the composition, moisture adsorption characteristics and lattice constant of the powder were evaluated. The results are shown in Table 1.

Examples 27 and 28

The same treating procedures and evaluation methods as described in Example 20 were conducted wherein $MgCl_2$ (Example 27) or $ZnCl_2$ (Example 28) was used instead of $CaCl_2$ and thus the composition of zeolite was varied as shown in Table 1. All other conditions remained the same. The results are shown in Table 1.

Examples 29 and 30

FAU-type zeolite having a $SiO_2/Al_2O_3$ ratio of 4.8 by mole (trade name "HSZ-301NAA" available from Tosoh Corporation) was incorporated in an aqueous $NH_4Cl$ solution. The concentration of $NH_4Cl$ in the aqueous solution was 1.5 equivalents (Example 29) or 3 equivalents (Example 30), respectively, to the content of aluminum in zeolite. The mixture was maintained at 60°C for 20 hours with stirring whereby $NH_4^+$ was introduced in the zeolite by ion-exchange. The ion-exchanged zeolite was washed with pure water and then dried at 75°C. Then the dried powdery zeolite was hydrated and placed in an electric oven where the powder was steam-heated at 600°C for one hour. Then the powder was again hydrated, and the composition, moisture adsorption characteristics and lattice constant of the powder were evaluated. The results are shown in Table 1.

Example 31

FAU-type zeolite having a $SiO_2/Al_2O_3$ ratio of 5.6 by mole (trade name "HSZ-320NAA" available from Tosoh Corporation) was incorporated in an aqueous solution having dissolved therein $CaCl_2$, $LiCl$ and $NH_4Cl$ in amounts of 10 equivalent, 15 equivalents and 10 equivalents, respectively, to the content of aluminum in zeolite. The mixture was maintained at 60°C for 20 hours while being stirred whereby $Ca^{2+}$, $Li^+$ and $NH_4^+$ were introduced in the zeolite by ion-exchange. The ion-exchanged zeolite was washed with pure water and then dried at 75°C. Then the dried powdery zeolite was hydrated and placed in an electric oven where the powder was steam-heated at 600°C for one hour. Then the powder was again hydrated, and the composition, moisture adsorption characteristics and lattice constant of the powder were evaluated. The results are shown in Table 1.

Example 32

FAU-type zeolite having a $SiO_2/Al_2O_3$ ratio of 5.6 by mole (trade name "HSZ-320NAA" available from Tosoh Corporation) and a binder were mixed together at a mixing ratio of 100/25 and kneaded to give pellets. The pellets were calcined at 600°C for 3 hours to obtain a particulate product. The particulate product was allowed to leave at 25°C for 20 hours in an aqueous solution having dissolved therein $CaCl_2$ and $NH_4Cl$ in amounts of 3 equivalents and 10 equivalents, respectively, to the amount of aluminum contained in the net mass of zeolite in the particulate product. The mixture was placed in a fixed bed column where a supernatant liquid was circulated at 50°C for 20 hours whereby $Ca^{2+}$ and $NH_4^+$ were introduced in the zeolite by ion-exchange. The ion-exchanged zeolite was washed with pure water and then dried at 75°C. Then the dried powdery zeolite was hydrated and placed in an electric oven where the powder was steam-heated at 600°C for one hour. Then the powder was again hydrated, and the composition, moisture adsorption characteristics and lattice constant of the powder were evaluated. The results are shown in Table 1.

Example 33

FAU-type zeolite having a $SiO_2/Al_2O_3$ ratio of 5.6 by mole (trade name "HSZ-320NAA" available from Tosoh Corporation) and a binder were mixed together at a mixing ratio of 100/25 and kneaded to give pellets . The pellets were calcined at 600°C for 3 hours to obtain a particulate product. The particulate product was placed in a fixed bed column wherein an aqueous $NH_4Cl$ solution was circulated at 50°C for 20 hours whereby $NH_4^+$ was introduced in the zeolite by ion-exchange. The aqueous $NH_4Cl$ solution used contained $NH_4Cl$ in an amount of 3 equivalents to the amount of aluminum contained in the net mass of zeolite in the particulate product. The ion-exchanged zeolite was washed with pure water and then dried at 75°C. Then the dried powdery zeolite was hydrated and placed in an electrical oven where the powder was steam-heated at 600°C for one hour. Then the powder was again hydrated, and the composition, moisture adsorption characteristics and lattice constant of the powder were evaluated. The results are shown in Table 1.

Example 34

FAU-type zeolite having a $SiO_2/Al_2O_3$ ratio of 5.6 by mole (trade name "HSZ-320NAA" available from Tosoh Corporation) and a binder were mixed together at a mixing ratio of 100/25 and kneaded to give pellets. The pellets were calcined at 600°C for 3 hours to obtain a particulate product. The particulate product was allowed to leave at 25°C for 20 hours in an aqueous solution having dissolved therein $CaCl_2$ and $NH_4Cl$ in amounts of 3 equivalents and 10 equivalents, respectively, to the amount of aluminum contained in the net mass of zeolite in the particulate product. The mixture was placed in a fixed bed column where a supernatant liquid was circulated at 50°C for 20 hours whereby $Ca^{2+}$ and $NH_4^+$ were introduced in the zeolite by ion-exchange. The ion-exchanged zeolite was washed with pure water and then dried at 75°C. Then the dried powdery zeolite was heat-treated at 700°C for one hour in a stream of air. Then the powder was hydrated, and the composition, moisture adsorption characteristics and lattice constant of the powder were evaluated. The results are shown in Table 1.

Example 35

A binderless zeolite particulate product produced by the method described in Japanese Unexamined Patent Publication No. H6-74129 was placed in a fixed bed column where an aqueous $NH_4Cl$ solution was circulated at 50°C for 20 hours whereby $NH_4^+$ was introduced in the zeolite by ion-exchange. The aqueous $NH_4Cl$ solution used contained $NH_4Cl$ in an amount of 3 equivalents to the amount of aluminum contained in the net mass of zeolite in the particulate product. The ion-exchanged zeolite was washed with pure water and then dried at 75°C. Then the dried powdery zeolite was hydrated and placed in an electrical oven where the powder was steam-heated at 600°C for one hour. Then the powder was again hydrated, and the composition, moisture adsorption characteristics and lattice constant of the powder were evaluated. The results are shown in Table 1.

Table 1

| Example No. | Ion Exchange Ratio (%) | | | Moisture Adsorption (g/100g zeolite) | | | Lattice Constant |
|---|---|---|---|---|---|---|---|
| | M | Na | H | ①25°Cr /5Tor | ②100°C/ 15Torr | *1 ①-② | |
| 1 | 9 | 32 | 59 | 29 | 10 | 19 | 24.597 |
| 2 | 10 | 31 | 59 | 30 | 10 | 20 | 24.611 |
| 3 | 10 | 30 | 60 | 29 | 10 | 19 | 24.604 |
| 4 | 8 | 34 | 58 | 28 | 9.5 | 18.5 | 24.624 |
| 5 | 13 | 31 | 56 | 32 | 14 | 18 | 24.625 |
| 6 | 13 | 31 | 56 | 30 | 10 | 20 | 24.615 |
| 7 | 13 | 31 | 56 | 29 | 9 | 20 | 24.602 |
| 8 | 33 | 31 | 36 | 32 | 14.5 | 17.5 | 24.624 |
| 9 | 22 | 30 | 48 | 31.5 | 12 | 19.5 | 24.620 |
| 10 | 24 | 36 | 40 | 30.5 | 12.5 | 18 | 24.622 |
| 11 | 12 | 35 | 53 | 32 | 11 | 21 | 24.615 |
| 12 | 11 | 35 | 54 | 31 | 10.5 | 20.5 | 24.603 |
| 13 | -- | 62 | 38 | 31 | 11.5 | 19.5 | 24.619 |
| 14 | -- | 43 | 57 | 30.5 | 10 | 20.5 | 24.610 |
| 15 | -- | 37 | 63 | 29 | 8.5 | 20.5 | 24.600 |
| 16 | 10 | 30 | 60 | 30 | 9.5 | 20.5 | 24.618 |
| 17 | 21 | 31 | 48 | 34 | 19 | 15 | 24.637 |
| 18 | 21 | 31 | 48 | 33 | 18 | 15 | 24.639 |
| 19 | 24 | 30 | 46 | 33 | 18 | 15 | 24.629 |
| 20 | 22 | 30 | 48 | 33 | 18 | 15 | 24.634 |
| 21 | 24 | 36 | 40 | 33 | 17 | 16 | 24.632 |
| 22 | -- | 37 | 63 | 33 | 15 | 18 | 24.620 |
| 23 | -- | 43 | 57 | 33 | 15 | 18 | 24.622 |
| 24 | -- | 43 | 57 | 32.5 | 12.5 | 20 | 24.613 |
| 25 | 13 | 31 | 56 | 34 | 17 | 17 | 24.624 |
| 26 | 13 | 31 | 56 | 32 | 12 | 20 | 24.621 |
| 27 | 9 | 32 | 59 | 32 | 12 | 20 | 24.607 |
| 28 | 10 | 30 | 60 | 31.5 | 11.5 | 20 | 24.601 |
| 29 | -- | 44 | 56 | 29.5 | 10 | 19.5 | 24.613 |
| 30 | -- | 37 | 63 | 28.5 | 9.5 | 19 | 24.599 |
| 31 | 25 | 30 | 45 | 32 | 11.5 | 20.5 | 24.622 |
| 32 | 13 | 31 | 56 | 34 | 15 | 19 | 24.592 |
| 33 | -- | 37 | 63 | 32.5 | 12.5 | 20 | 24.594 |
| 34 | 13 | 31 | 56 | 32.5 | 15 | 17.5 | 24.617 |
| 35 | -- | 37 | 63 | 29.5 | 9 | 20.5 | 24.602 |

* 1 Effective Moisture Adsorption = Moisture Adsorption Difference of ① - ② (g/g zeolite)

Comparative Examples 1 to 3

The following general silica gel was used.

Comparative Example 1: Silica gel A-type
Comparative Example 2: Silica gel B-type
Comparative Example 3: Trade name "Laponite" available from Tosoh Silica Corporation

Each silica gel was hydrated, and the composition and moisture adsorption characteristics of the silica gel were evaluated. The results are shown in Table 2.

Comparative Example 4

LTA-type zeolite having a $SiO_2/Al_2O_3$ ratio of 2.0 by mole (trade name "A-4" available from Tosoh Corporation) was hydrated, and the composition and moisture adsorption characteristics of the zeolite were evaluated. The results are shown in Table 2.

Comparative Examples 5 and 6

LTA-type zeolite having a $SiO_2/Al_2O_3$ ratio of 2.0 by mole (trade name "A-4" available from Tosoh Corporation) was incorporated in an aqueous solution having dissolved therein $MgCl_2$ (Comparative Example 5) or $CaCl_2$ (Comparative Example 6) each in an amount of 10 equivalents to the amount of aluminum contained in the zeolite. The mixture was maintained at 60°C for 20 hours while being stirred whereby $Mg^{2+}$ or $Ca^{2+}$ was introduced in the zeolite by ion-exchange. The ion-exchanged zeolite was washed with pure water and then dried at 75°C. Then the dried powdery zeolite was again hydrated, and the composition and moisture adsorption characteristics of the zeolite were evaluated. The results are shown in Table 2.

Comparative Example 7

FAU-type zeolite having a $SiO_2/Al_2O_3$ ratio of 2.5 by mole (trade name "F-9" available from Tosoh Corporation) was hydrated, and the composition, moisture adsorption characteristics and lattice constant of the zeolite were evaluated. The results are shown in Table 2.

Comparative Examples 8 and 9

FAU-type zeolite having a $SiO_2/Al_2O_3$ ratio of 2,5 by mole (trade name "F-9" available from Tosoh Corporation) was incorporated in an aqueous solution having dissolved therein $MgCl_2$ (Comparative Example 5) or $CaCl_2$ (Comparative Example 6) each in an amount of 10 equivalents to the amount of aluminum contained in the zeolite. The mixture was maintained at 60°C for 20 hours while being stirred whereby $Mg^{2+}$ or $Ca^{2+}$ was introduced in the zeolite by ion-exchange. The ion-exchanged zeolite was washed with pure water and then dried at 75°C. Then the dried zeolite was again hydrated, and the composition, moisture adsorption characteristics and lattice constant of the zeolite were evaluated. The results are shown in Table 2.

Comparative Example 10

β-type zeolite having a $SiO_2/Al_2O_3$ ratio of 20 by mole (trade name "HSZ-920NHA" available from Tosoh Corporation) was hydrated, and the composition and moisture adsorption characteristics of the zeolite were evaluated. The results are shown in Table 2.

Comparative Example 11

PAU-type zeolite having a $SiO_2/Al_2O_3$ ratio of 5.6 by mole (trade name "HSZ-320NAA" available from Tosoh Corporation) was hydrated, and the composition, moisture adsorption characteristics and lattice constant of the zeolite were evaluated. The results are shown in Table 2.

Comparative Examples 12 to 14

FAU-type zeolite having a $SiO_2/Al_2O_3$ ratio of 5.6 by mole (trade name "HSZ-320NAA" available from Tosoh Corporation) was incorporated in an aqueous solution having dissolved therein $MgCl_2$ (Comparative Example 12) or $MnCl_2$ (Comparative Example 13) or LiCl (Comparative Example 14) each in an amount of 10 equivalents to the amount of aluminum contained in the zeolite. The mixture was maintained at 60°C for 20 hours while being stirred whereby $Mg^{2+}$ or $Mn^{2+}$ or $Li^+$ was introduced in the zeolite by ion-exchange. The ion-exchanged zeolite was washed with pure water and then dried at 75°C. Then the dried zeolite was again hydrated, and the composition, moisture adsorption characteristics and lattice constant of the zeolite were evaluated. The results are shown in Table 2.

Comparative Example 15

FAU-type zeolite having a $SiO_2/Al_2O_3$ ratio of 5.6 by mole (trade name "HSZ-320NAA" available from Tosoh Corporation) was incorporated in an aqueous solution having dissolved therein $LaCl_3$ in an amount of 10 equivalents to the amount of aluminum contained in the zeolite. The mixture was maintained at 60°C for 20 hours while being stirred whereby $La^{3+}$ was introduced in the zeolite by ion-exchange. The ion-exchanged zeolite was washed with pure water and then dried at 75°C. Then the dried zeolite was again hydrated, and the composition, moisture adsorption characteristics and lattice constant of the zeolite were evaluated. The results are shown in Table 2.

Comparative Example 16

FAU-type zeolite having a $SiO_2/Al_2O_3$ ratio of 5.0 by mole was incorporated in an aqueous solution having dissolved therein $NH_4Cl$ in an amount of 12 equivalents to the content of aluminum contained in the zeolite. The mixture was maintained at 85°C for one hour with stirring whereby $NH_4^+$ was introduced in the zeolite by ion-exchange. The ion-exchanged zeolite was washed with pure water. The procedures of ion-exchange and washing with pure water were further repeated twice, and then dried at 75°C. Then the dried powdery zeolite was hydrated and placed in an electrical oven where the powder was steam-heated at 650°C for one hour. Then the powder was again hydrated, and the composition, moisture adsorption characteristics and lattice constant of the powder were evaluated. The results are shown in Table 2.

Comparative Example 17

The same zeolite as used in Comparative Example 16 was incorporated in an aqueous solution having dissolved therein $NH_4Cl$ in an amount of 5 equivalents to the total content of aluminum contained in the zeolite. The mixture was maintained at 85°C for one hour with stirring whereby $NH_4^+$ was introduced in the zeolite by ion-exchange. The ion-exchanged zeolite was washed with pure water, and then hydrated, and the composition, moisture adsorption characteristics and lattice constant of the zeolite were evaluated. The results are shown in Table 2.

Table 2

| Comparative Example | Ion Exchange Ratio (%) | | | Moisture Adsorption (g/100g zeolite) | | | Lattice Constant |
|---|---|---|---|---|---|---|---|
| | M | Na | H | ①26°C/ 5Torr | ②100°C/ 15Torr | *1 ①-② | |
| 1 | - | - | - | 10 | 3 | 7 | |
| 2 | - | - | - | 5 | 2 | 3 | |
| 3 | - | - | - | 9 | 3 | 6 | |
| 4 | - | 100 | 0 | 26.5 | 21.5 | 5 | |
| 5 | 54 | 46 | 0 | 34 | 23 | 11 | |
| 6 | 90 | 10 | 0 | 25 | 22 | 3 | |
| 7 | - | 100 | 0 | 31 | 23 | 8 | 24.946 |
| 8 | 74 | 26 | 0 | 37 | 28 | 9 | 24.909 |
| 9 | 91 | 9 | 0 | 33 | 20 | 13 | 24.871 |
| 10 | - | <0.5 | 100 | 15 | 7 | 8 | |
| 11 | - | 100 | 0 | 30 | 16 | 14 | 24.634 |
| 12 | 69 | 31 | 0 | 36 | 25 | 11 | 24.610 |
| 13 | 71 | 29 | 0 | 33 | 18.5 | 14.5 | 24.620 |
| 14 | 74 | 26 | 0 | 29 | 18 | 13 | 24.625 |
| 15 | 53 | 36 | 11 | 24.5 | 7 | 17.5 | 24.679 |
| 16 | - | 19 | 81 | 25 | 9 | 16 | 24.522 |
| 17 | - | 3 | 97 | 26.5 | 10 | 16.5 | 24.541 |

* 1 Effective Moisture Adsorption = Molsture Adsorption Difference of ① - ② (g/g zoolite)

Industrial Applicability

The adsorbent comprising a zeolite according to the present invention can be used in a zeolite-water heat pump system and an open cycle moisture adsorption-desorption system. These zeolite-water heat pump system and open cycle moisture adsorption-desorption system can utilize a low-temperature exhaust heat, a cogeneration exhaust heat, a midnight starting electric power, a solar heat, a terrestrial heat and a spa heat as the heat source for regeneration. These systems do not produce any harmful substances and do not cause any environmental pollution, and are advantageous from an economical view point.

The zeolite-water heat pump system can be utilized for a temperature regulator, a cooler and a water-removing device. The temperature regulator includes, for example, an air conditioner, a vehicle air conditioner, a low-temperature store, a hot water supply and a warmth-keeping storehouse. The cooler includes, for example, a refrigerator, a freezing store, an ice-maker, a water cooler, an electronic instrument-cooling device, a computer CPU cooling device and a freeze-dryer. The water-removing device includes, for example, a dryer and a dehydrator. The open cycle moisture adsorption-desorption system can be utilized in a dehumidifier provided with a dehumidifying adsorbent rotor comprising a zeolite adsorbent. The dehumidifier includes, for example, a dehumidifying cooler and a dehumidifying air conditioner.

**Claims**

1. An adsorbent comprising a zeolite for a heat pump **characterized in that** the zeolite has a moisture adsorption of at least 28% by weight as measured at a temperature of 25°C under a partial pressure of water vapor of 5 Torr, and exhibits a moisture adsorption difference in the range of 15% to 25% by weight between a moisture adsorption as measured at a temperature of 25°C under a partial pressure of water vapor of 5 Torr and a moisture adsorption as measured at a temperature of 100°C under a partial pressure of water vapor of 15 Torr.

2. The adsorbent comprising a zeolite for a heat pump according to claim 1, wherein the moisture adsorption difference between a moisture adsorption as measured at a temperature of 25°C under a partial pressure of water vapor of 5 Torr and a moisture adsorption as measured at a temperature of 100°C under a partial pressure of water vapor of 15 Torr is in the range of 17% to 25% by weight.

3. The adsorbent comprising a zeolite for a heat pump according to claim 1, wherein the moisture adsorption difference between a moisture adsorption as measured at a temperature of 25°C under a partial pressure of water vapor of 5 Torr and a moisture adsorption as measured at a temperature of 100°C under a partial pressure of water vapor of 15 Torr is in the range of 19% to 25% by weight.

4. The adsorbent comprising a zeolite for a heat pump according to any one of claims 1 to 3, wherein the zeolite has a FAU type zeolite structure having a $SiO_2/Al_2O_3$ mole ratio of at least 3.

5. The adsorbent comprising a zeolite for a heat pump according to any one of claims 1 to 4, wherein 30% to 75% of the ion-exchangeable cations are exchanged by proton, and the cation other than proton in the ion-exchanged zeolite comprises $Na^+$ alone or $Na^+$ plus at least one metal ion selected from univalent metal ions other than $Na^+$, and divalent metal ions.

6. The adsorbent comprising a zeolite for a heat pump according to claim 5, wherein the zeolite has a lattice constant in the range of 24.530 to 24.625 angstroms.

7. A process for producing the adsorbent comprising a zeolite for a heat pump as claimed in any one of claims 1 to 6, which comprises the steps of:

   ion-exchanging an exchangeable cation in a zeolite, and then,
   heat-treating the cation-exchanged zeolite in a stream of air or nitrogen.

8. A process for producing the adsorbent comprising a zeolite for a heat pump as claimed in any one of claims 1 to 6, which comprises the steps of:

   ion-exchanging an exchangeable cation in a zeolite, and then,
   heat-treating the cation-exchanged zeolite in the presence of steam.

9. A zeolite-water heat pump system comprising the adsorbent comprising a zeolite for a heat pump as claimed in any one of claims 1 to 6.

10. A temperature controller provided with the zeolite-water heat pump system as claimed in claim 9.

11. A cooler provided with the zeolite-water heat pump system as claimed in claim 9.

**12.** A water-removing apparatus provided with the zeolite-water heat pump system as claimed in claim 9.

**13.** An open cycle moisture adsorption-desorption system comprising the adsorbent comprising a zeolite for a heat pump as claimed in any one of claims 1 to 6.

**14.** A dehumidifier provided with the open cycle water adsorption-desorption system as claimed in claim 13.

FIG. 1

FIG. 2

FIG. 3

## INTERNATIONAL SEARCH REPORT

| International application No. |
|---|
| PCT/JP2004/010819 |

A. CLASSIFICATION OF SUBJECT MATTER
Int.Cl⁷ B01J20/18, F25B17/08, C01B39/02, C01B39/20

According to International Patent Classification (IPC) or to both national classification and IPC

B. FIELDS SEARCHED

Minimum documentation searched (classification system followed by classification symbols)
Int.Cl⁷ B01J20/16-20/18, F25B17/08, C01B39/02, C01B39/20

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2002-28482 A (Tosoh Corp.),<br>29 January, 2002 (29.01.02),<br>Claims; Par. Nos. [0010], [0014]; example 12<br>(Family: none) | 1-12<br>13,14 |
| X<br>A | JP 2003-114067 A (Mitsubishi Chemical Corp.,<br>Denso Corp.),<br>18 April, 2003 (18.04.03),<br>Claims; Par. No. [0018]; examples<br>(Family: none) | 1-4,9-14<br>5-8 |
| X<br>A | WO 2002/066910 A1 (Mitsubishi Chemical Corp.,<br>Denso Corp.),<br>29 August, 2002 (29.08.02),<br>Claims; page 19, line 3 to page 20, line 10<br>& EP 1363085 A1 & JP 2003-240382 A | 1-4,9-14<br>5-8 |

☒ Further documents are listed in the continuation of Box C. ☐ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>21 October, 2004 (21.10.04) | Date of mailing of the international search report<br>09 November, 2004 (09.11.04) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

International application No.

PCT/JP2004/010819

C (Continuation). DOCUMENTS CONSIDERED TO BE RELEVANT

| Category* | Citation of document, with indication, where appropriate, of the relevant passages | Relevant to claim No. |
|---|---|---|
| P,X | JP 2004-132690 A (Denso Corp., Mitsubishi Chemical Corp.), 30 April, 2004 (30.04.04), Claims; Par. Nos. [0084], [0172]; examples (Family: none) | 1-4,9-11 |

Form PCT/ISA/210 (continuation of second sheet) (January 2004)